# EUROPÄISCHE PATENTSCHRIFT

(11) **EP 2 340 141 B1**
(45) Veröffentlichungstag und Bekanntmachung des Hinweises auf die Patenterteilung: **23.12.2015**
(21) Anmeldenummer: 09736381.6
(22) Anmeldetag: 05.10.2009
(51) Int. Cl.: B23K 11/30

(54) **WIDERSTANDSSCHWEISSELEKTRODE**
RESISTANCE WELDING ELECTRODE
ELECTRODE DE SOUDAGE PAR RÉSISTANCE

(30) Priorität: 06.10.2008 DE 102008050567; 01.10.2009 DE 102009047920
(43) Veröffentlichungstag der Anmeldung: 06.07.2011
(73) Patentinhaber: Holzhauer GmbH & Co. KG, 72517 Sigmaringendorf (DE)
(72) Erfinder: HOLZHAUER, Anton, 72517 Sigmaringendorf (DE)
(74) Vertreter: Hering, Hartmut
(86) Internationale Anmeldenummer: PCT/EP2009/007107
(87) Internationale Veröffentlichungsnummer: WO 2010/040488

(56) Entgegenhaltungen:
- WO-A2-03/028936
- US-A- 4 728 765
- US-A- 5 387 774

## Beschreibung

Die Erfindung befaßt sich mit einer Widerstandsschweißelektrode, welche einen schaftförmigen Halter und ein Elektrodenteil hat. Das Elektrodenteil kann in Form einer Elektrodenkappe (female) oder einer Stiftelektrode (male) ausgelegt sein. Das jeweilige Elektrodenteil ist über passende Konusflächen kraftschlüssig mit dem zugeordneten Halter verbunden. Gegebenenfalls können Kühlbohrungen für einen Hochleistungseinsatz vorgesehen sein.

Bei derartigen aus dem Stand der Technik bekannten Schweißelektroden wird für die Herstellung der kraftschlüssigen Verbindung von Halter und Elektrodenteil ein Konuskegelwinkel von 4 bis 7 Grad eingesetzt. Über die passenden Konusflächen erfolgt dann eine Festsitzverbindung zwischen Halter und Elektrodenteil. Aus Toleranzgründen ist es erforderlich, dass die jeweiligen Elektrodenteile in axialer Richtung zu den jeweiligen zugeordneten Stirnflächen des Halters beabstandet sind, so dass keine unmittelbare Anlageberührung sondern ein Abstand vorhanden ist, um einen festen Sitz des Elektrodenteils am Halter zu gewährleisten. Diese Festsitzverbindung erfolgt kegelwinkelbedingt bei einer relativ kleinen axialen Relativbewegung zwischen dem Halter und dem zugeordneten Elektrodenteil. Bei der Kraftübertragung, insbesondere bei der Anpresskraft beim Schweißen mit einer derartigen Widerstandsschweißelektrode kann sich das Elektrodenteil in den Halter eingraben und es können sich wulstförmige Umfangserhebungen am Halter bilden. Wenn nun die Elektrodenteile ausgewechselt werden müssen, können sich hierdurch bedingt gewisse Schwierigkeiten ergeben, wie Undichtigkeit, schlechter Festsitz und Gefahr des Lösens des Elektrodenteils vom Halter und ein größerer Verbrauch von Haltern, welche hinsichtlich den Gestehungskosten relativ teuer sind. Als Folge ergeben sich auch zusätzliche Produktionsausfallkosten.

Aus DE 101 48 035 B4, die die Basis für den Oberbegriff des Anspruchs 1 bildet, ist eine Vorrichtung zum Widerstandsschweißen von Werkstücken bekannt, bei der eine Schweißelektrode einen Elektrodenkörper umfasst, an dem eine Elektrodenkappe im Schweißbereich anbringbar oder angebracht ist. Lediglich aus der Zeichnung lässt sich vorausgesetzt der Tatsache, dass es sich um eine maßstabsgetreue Wiedergabe handelt, ersehen, dass die auf den Elektrodenkörper aufgesetzte Elektrodenkappe über eine Radialflächenauflage axial in Kontakt mit dem Halter ist. Im übrigen befasst sich dieser Stand der Technik im wesentlichen mit einer Lösung dafür, dass die interessierende Information über die Elektrodentemperatur zuverlässiger und kostengünstiger erhalten werden kann. Hierzu weist die Schweißvorrichtung Messmittel zur Temperaturerfassung auf, welche in geeigneter vorteilhafter Weise zuverlässig die Temperatur des Elektrodenkörpers und/oder die Temperatur der Elektrodenkappe erfassen.

Die Erfindung zielt darauf ab, eine Widerstandsschweißelektrode bereit zu stellen, welche auf fertigungstechnisch einfache Weise den zuverlässigen Festsitz von Halter und Elektrodenteil bei verbesserten Kraftübertragungsverhältnissen und Stromübertragungsverhältnissen gestattet sowie ein materialökonomischer Einsatz derartiger Widerstandsschweißelektroden erreicht wird.

Erfindungsgemäß wird hierzu eine Widerstandsschweißelektrode mit einem schaftförmigen Halter und einem Elektrodenteil in Form einer Elektrodenkappe oder einer Stiftelektrode angegeben, welche über Konusflächen kraftschlüssig verbunden sind, und die wenigstens eine Kühlbohrung haben. Bei dieser Widerstandsschweißelektrode liegt der Konuswinkel der Konusflächen in einem Bereich von etwa 1° bis etwa 3°, der Halter und das Elektrodenteil sind derart gefügt, dass der Halter und das Elektrodenteil zusätzlich über eine Radialflächenauflage axial in Kontakt miteinander sind, und der dem Halter zugewandte Rand des Elektrodenteils in eine zugeordnete, halterseitige Aufnahmeausnehmung durch Reduzieren eingezwängt ist.

Bei der erfindungsgemäßen Auslegung ist somit ein sehr kleiner Konuskegelwinkel gewählt, und zusätzlich trifft bei der Erfindung die axiale Fläche des Halters auf den Boden der Bohrung im Elektrodenteil bei einer Elektrodenkappe (female) auf, und bei einer Stiftelektrode (male) trifft die axiale Fläche des Halters auf den äußeren Ansatz oder auf die innere Anschlagfläche auf. Somit erfolgt bei der erfindungsgemäßen Auslegung zuverlässig eine axiale Krafteinleitung, Kraftübertragung und Stromeinleitung. Durch diese axiale Anlage von Halter und Elektrodenteil über eine sich im wesentlichen radial erstreckende Fläche können hohe Kräfte übertragen werden, ohne dass sich Verformungen, wie Wulstbildungen oder Deformationen am Halter der Widerstandsschweißelektrode ergeben. Dank des kleinen Konuskegelwinkels ergeben sich beim Fügen von Halter und Elektrodenteil beträchtliche Relativbewegungen an den Berührungsflächen von Halter und Elektrodenteil. Auch können Dank der zusätzlichen Flächenauflage höhere axiale Presskräfte aufgebracht werden, was insbesondere bei hochfesten Blechen oder pressgehärteten Blechen von Vorteil ist. Ferner lassen sich die Abmessungen des Elektrodenteils reduzieren, wodurch sich eine beträchtliche Einsatzmaterialeinsparung erzielen läßt. Hierdurch lassen sich die Herstellungs- und Materialkosten herabsetzen. Da somit bei dieser Widerstandsschweißelektrode dünnwandige Teile eingesetzt werden, wird eine Zwangskühlung durch wenigstens eine zentral vorgesehene Kühlbohrung vorgesehen.

Vorzugsweise geht die Kühlbohrung nicht durchgehend in die Elektrodenkappe hinein, sondern die Kühlbohrung endet im Halter und ist auch in diesem nicht durchgehend ausgebildet. Beim Wechseln des Elektrodenteils ergeben sich hierdurch dahingehend Vorteile, dass keine Kühlflüssigkeit aus den Kühlkanälen oder Kühlbohrungen austreten kann.

Um eine äußerst intensive und verstärkte Zwangskühlung zu erzielen, ist die Kühlbohrung mit Kühlrippen versehen.

Gemäß einer bevorzugten Ausführungsform der Widerstandsschweißelektrode ist in dem von den Kühlrippen des Halters gebildeten Innenraum des Halters ein Kühlrohr mittig eingesetzt. Die Kühlrippen dienen hierbei zusätzlich dazu, dass Kühlrohr in diesem Innenraum zuverlässig mittig zu halten, um eine möglichst über den Umfang hinweg gleichmäßige und effektive Kühlung der Widerstandsschweißelektrode sicher zu stellen. Auch ist anzunehmen, dass aufgrund der Kühlrippen der Halter eine geringere thermische Beanspruchung hat. Daher kann er aus billigerem, beispielsweise Elektrolytkupfermaterial hergestellt werden, welches jedoch thermisch und elektrisch besser leitfähig ist.

Gemäß einer weiteren bevorzugten Ausführungsform nach der Erfindung kann das Elektrodenteil eine relativ dünne Wandstärke besitzen. Hierdurch erhält man eine weitere Materialeinsparung bei gleichem Leistungsvermögen der Widerstandsschweißelektrode.

Vorzugsweise ist die Widerstandsschweißelektrode nach der Erfindung derart ausgelegt, dass als Abstreifhilfe die dem Halter zugewandte Seite des Elektrodenteils derart gestaltet ist, dass zwischen dem Halter und dem Elektrodenteil eine Umfangsausnehmung als eine Greiferaufnahme gebildet wird. Bei einer derartigen Ausgestaltungsform erleichtert sich der Prozessablauf beim Auswechseln des Elektrodenteils.

Vorzugsweise hat das Elektrodenteil eine axiale Zusatzkühlbohrung. Hierdurch erhält man eine verstärkte und verbesserte Kühlung auch bei geringerem Werkstoffeinsatz.

Um einen sicheren Festsitz von Elektrodenteil und Halter zu erreichen, kann gemäß einer alternativen Ausführungsform zwischen dem Elektrodenteil und dem Halter eine radial kraft- und formschlüssig wirkende Zusatzarretierung vorgesehen sein. Zusätzlich wirkt diese Zusatzarretierung als Abdichtung gegen Kühlflüssigkeitsaustritt.

Vorzugsweise kann die Widerstandsschweißelektrode als Verbundelektrodenteil ausgebildet sein, so dass es nicht materialeinheitlich ausgelegt zu werden braucht, sondern unterschiedliche Materialien für die jeweiligen Einsatzzwecke und Anwendungszwecke in geeigneter Weise gewählt werden können. Hierdurch lassen sich insbesondere die Kosten für eine solche Widerstandsschweißelektrode reduzieren und es lässt sich eine bessere Leistungsfähigkeit erzielen.

Gemäß einer bevorzugten Ausführungsform nach der Erfindung umfasst das Verbundelektrodenteil eine Hülse, vorzugsweise aus einem weicheren und kostengünstigeren Werkstoff, und einen mit der Hülse vernieteten Einsatz aus Hochleistungswerkstoff bzw. Spezialwerkstoff. Bei einer solchen Auslegungsform eines Verbundelektrodenteils kann man somit beispielsweise für die Hülse ein weicheres Material wählen, welches in Verbindung mit dem Halter materialschonend wirkt, während man für die eigentliche Schweißbearbeitung der Widerstandsschweißelektrode an den hierfür benötigten Bereichen hochwertiges und somit teureres Spezialmaterial einsetzt. Bei einer derartigen Verbundelektrodenkonstruktion können insbesondere die Materialien von Halter und Einsatz einfach getrennt werden und ermöglichen eine bessere Recyclebarkeit.

Ferner zeichnet sich die Widerstandsschweißelektrode nach der Erfindung in bevorzugter Weise dadurch aus, dass der Halter die Anpresskraft für das Widerstandsschweißen und den Schweißstrom im wesentlichen direkt auf den Einsatz aus Hochleistungswerkstoff überträgt. Hierdurch erhält man eine weitgehend direkte und daher verlustarme Kraft- und Stromübertragung.

Vorzugsweise kann der Einsatz aus dem Hochleistungswerkstoff eine axiale Zusatzbohrung aufweisen. Hierdurch lässt sich die Menge des eingesetzten Hochleistungswerkstoffs reduzieren und zugleich ergibt sich eine verbesserte Kühlwirkung.

Vorzugsweise erfasst bei einer als Verbundelektrodenteil ausgebildeten Widerstandsschweißelektrode der Einsatz aus Hochleistungswerkstoff nur die schweißtechnisch relevanten Bereiche, d.h. die mit dem Schweißgut zusammen arbeitenden Bereiche. Hierdurch lassen sich insbesondere Widerstandsschweißelektroden mit hoher Leistungsfähigkeit durch möglichst günstige Materialwahl kosten- und materialsparend herstellen.

Weitere Einzelheiten, Merkmale und Vorteile der Erfindung ergeben sich aus der nachstehenden Beschreibung von bevorzugten Ausführungsformen unter Bezugnahme auf die beigefügte Zeichnung, welche nicht beschränkende Beispiele darstellen.

In den Figuren der Zeichnung ist folgendes gezeigt:
- Fig. 1 bis Fig. 3: sind jeweils schematische Axialschnittansichten einer Widerstandsschweißelektrode in Form einer Elektrodenkappe (female) in Form von Ausführungsvarianten gezeigt;
- Fig. 4: ist eine schematische Axialschnittansicht einer Widerstandsschweißelektrode mit einem Elektrodenteil in Form einer Stiftelektrode (male);
- Fig. 5: ist eine schematische Axialschnittansicht einer Ausführungsvariante eines Elektrodenteils in Form einer Elektrodenkappe, ausgehend von der Ausführungsform nach Figur 3;
- Fig. 6 bis Fig. 12: sind schematische Axialschnittansichten zur Verdeutlichung von bevorzugten Ausführungsformen von Verbundelektroden in Form von Elektrodenkappen (female) und Stiftelektroden (male);
- Fig. 13: ist eine schematische Axialschnittansicht einer alternativen Ausführungsform einer Widerstandsschweißelektrode nach der Erfindung mit einer Zusatzkühlung für eine Elektrodenkappe bei dem dort gezeigten Beispiel;
- Fig. 14a und Fig. 14b: zeigen schematische Ansichten einer weiteren Ausgestaltungsform einer Widerstandsschweißelektrode nach der Erfindung zur Verdeutlichung von bevorzugten Auslegungseinzelheiten zur verstärkten und effizienten Kühlung derselben.

Bei allen in den Figuren der Zeichnung dargestellten und insgesamt mit 1 bezeichneten Widerstandsschweißelektroden umfasst eine solche Widerstandsschweißelektrode 1 einen schaftförmigen Halter 2 und ein insgesamt mit 3 bezeichnetes Elektrodenteil. Das Elektrodenteil kann in Form einer Elektrodenkappe 5 (female-Ausführungsform) oder in Form einer Stiftelektrode 7 (male-Ausführungsvariante) ausgelegt sein. Bei weiteren erläuterten Ausgestaltungsformen der Widerstandsschweißelektrode 1 können auch Verbundelektroden 3' vorgesehen sein.

Der jeweilige und insgesamt mit 2 bezeichnete schaftförmige Halter besitzt wenigstens eine Kühlbohrung 4, welche vorzugsweise mit Kühlrippen 18 versehen ist. Die Elektrodenkappe 5 oder die Stiftelektrode 7 ist mit dem schaftförmigen Halter 2 über Konusflächen verbunden. Diese Konusflächen haben einen Konuswinkel in einem Bereich von etwa 1° bis etwa 3°. Ferner sind der Halter 2 und der Elektrodenteil 3 bzw. 3' derart gefügt, dass der Halter 2 und das Elektrodenteil 3 bzw. 3' zusätzlich über eine Radialflächenauflage 6 axial in Kontakt miteinander sind. Um einen sicheren Festsitz des Elektrodenteils 3 bzw. 3' am schaftförmigen Halter 2 zu erreichen, ist ein Rand 15 des Elektrodenteils 3 bzw. 3', welcher dem Halter 2 zugewandt liegt, in eine zugeordnete halterseitige Aufnahmeausnehmung 16 durch Reduzieren gezwängt. Hierdurch erhält man einen zuverlässigen Festsitz für das Elektrodenteil 3 bzw. 3' an dem Halter 2, ohne dass die Gefahr von Beschädigungen oder Verformungen am Halter 2 besteht.

Dank dieser Konstruktion mit dem Konuswinkel in einem Bereich von etwa 1° bis 3° wird beim presstechnischen Fügen über eine relativ große axiale Erstreckung hinweg der Festsitz von Halter 2 und Elektrodenteil 3 bzw. 3' hergestellt. Die Radialflächenauflage 6, an welcher der Halter und das Elektrodenteil 3 bzw. 3' zusätzlich axial in Kontakt miteinander sind, bildet hierbei eine Art Anschlag beim presstechnischen Fügen dieser beiden Teile. Ferner lässt sich durch diese flächenhafte axiale Kontaktierung in axialer Richtung sowohl eine relativ große Kraft, eine sogenannte Anpresskraft oder deren Reaktionskraft übertragen und aufnehmen, so dass diese Auslegung nach der Erfindung auch relativ hohen Einsatzkräften Stand halten kann. Eine Verformung des Halters 2 an seiner Außenumfangsfläche oder an der Verbindungsfläche mit dem Elektrodenteil 3 bzw. 3' kann im Beanspruchungszustand weitgehend vermieden werden, so dass man für den Halter 2 längere Standzeiten erhält.

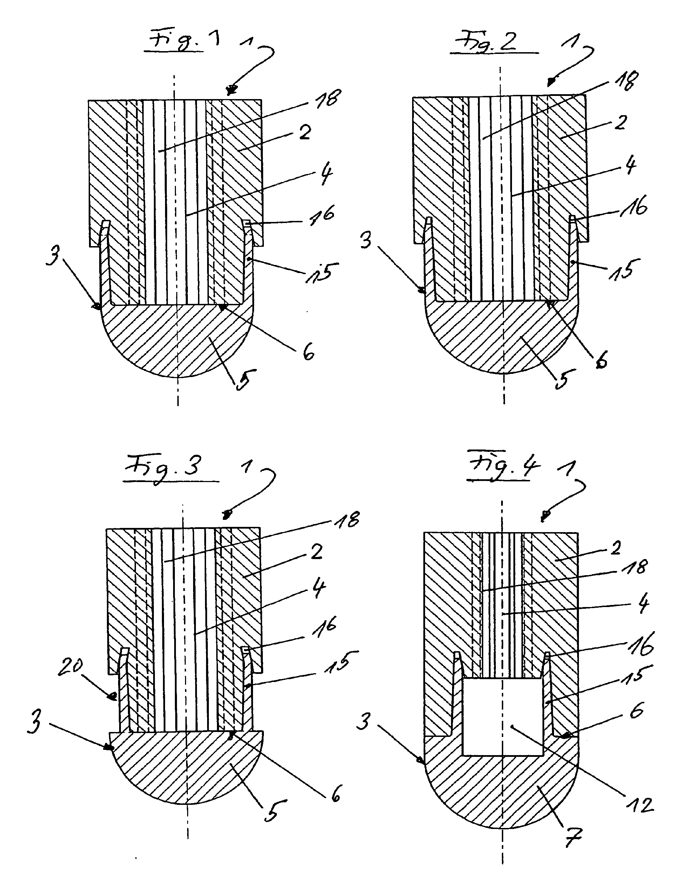

Alle Ausführungsformen nach den Figuren 1 bis 3 befassen sich mit der Ausgestaltungsform einer Widerstandsschweißelektrode 1 mit einer Elektrodenkappe als Elektrodenteil 3. Bei der Ausführungsform nach Figur 2 ist der Rand 15 der Elektrodenkappe 5 in die zugeordnete, halterseitige Aufnahmeausnehmung 16 durch Reduzieren und Einpressen eingezwängt. In Figur 1 ist die halterseitige Aufnahmeausnehmung 16 derart gestaltet, dass sie eine Art Hinterschneidung bildet, in welcher der Rand 15 der Elektrodenkappe 5 nicht nur eingezwängt, sondern auch in Richtung des hinterschnittenen Halters 2 eingebördelt ist. Hierdurch lassen sich die Verhältnisse bei der Festsitzverbindung zwischen Elektrodenkappe 5 und Halter 2 widerstandsfähiger gestalten.

Ausgehend von Figur 1 ist in Figur 3 eine Ausführungsvariante gezeigt, bei der zwischen Elektrodenkappe 5 und dem Halter 2 eine Umfangsausnehmung 20 vorgesehen ist, in welche sich ein Greifer eines nicht dargestellten Kappenwechslers einsetzen lässt, um im Bedarfsfall die Elektrodenkappe 5 vom Halter 2 abzustreifen, wenn es erforderlich sein sollte, die Elektrodenkappe 5 zu ersetzen. Mit Hilfe dieser Maßnahme lässt sich der Abstreifervorgang bei einem eventuellen Wechsel des Elektrodenteils 3 erleichtern, so dass man mit Hilfe des Wechslers und des zugeordneten Greifers desselben zuverlässig eine ausreichende Kraft aufbringen kann, um das Elektrodenteil 3 zuverlässig von dem Schaftteil abstreifen zu können.

Figur 4 zeigt eine Widerstandsschweißelektrode 1, bei der das Elektrodenteil 3 als Stiftelektrode 7 ausgebildet ist. Auch hierbei ist die Radialflächenauflage 6 verwirklicht und es ist ein vorspringender Rand der Stiftelektrode 7, welcher dort mit 15 bezeichnet ist, vorgesehen welcher in eine zugeordnete halterseitige Aufnahmeausnehmung 16 durch Reduzieren eingezwängt ist. Ferner ist in der Stiftelektrode 7 eine Zusatzbohrung 12 zu verstärkten Kühlung vorgesehen.

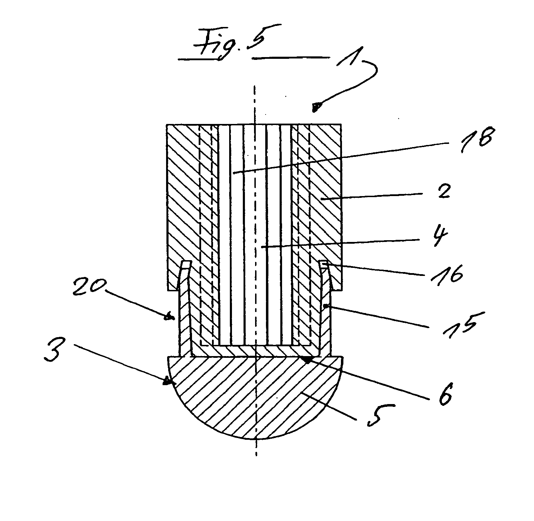

Figur 5 zeigt eine Widerstandsschweißelektrode 1 ähnlich der Ausführungsform nach Figur 3. Bei dieser Auslegungsform nach Figur 5 geht die Kühlbohrung 4 nicht vollständig durch den Halter 2 hindurch, sondern endet im Halter 2, ohne diesen vollständig zu durchsetzen. Damit kann ein Austreten von Kühlmittel beim Elektrodenwechsel wirksam verhindert werden.

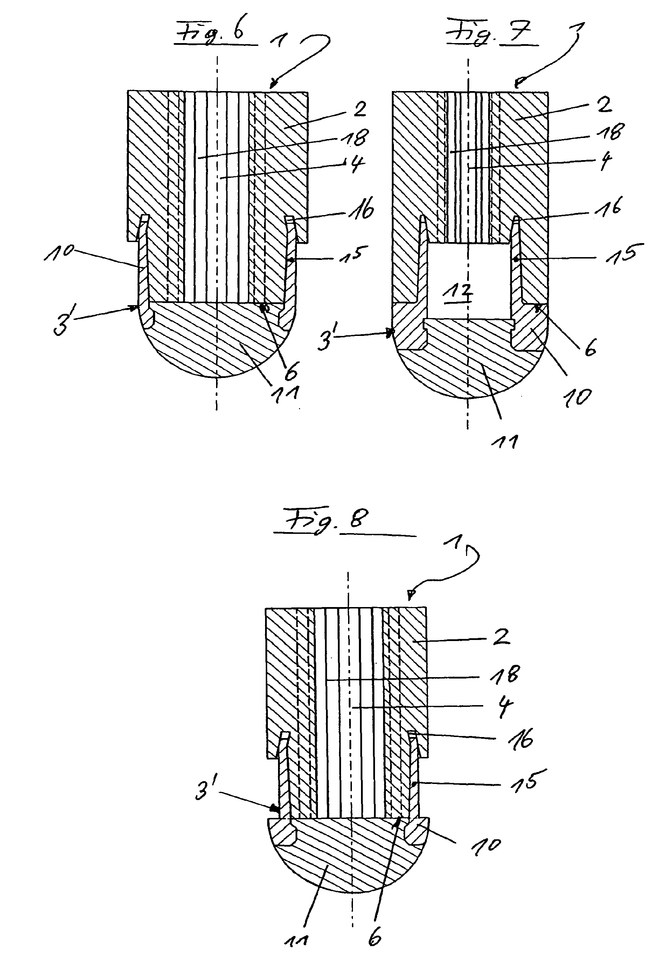

Die Figuren 6 bis 12 zeigen Ausführungsvarianten einer Widerstandsschweißelektrode 1, bei der das Elektrodenteil als Verbundelektrodenteil 3' ausgebildet ist. Diese Verbundelektrodenteile 3' sind nicht materialeinheitlich ausgelegt, sondern aus mehreren Teilen zusammengesetzt und auch aus unterschiedlichen bedarfsabhängig wählbaren Werkstoffen hergestellt. Im Hinblick auf eine verbesserte Recycelbarkeit lassen sich aber die Teile aus unterschiedlichen Materialen leicht, sauber und zuverlässig sowie prozesstechnisch einfach trennen. Hierzu sind die Komponenten des Verbundelektrodenteils 3' lediglich kraft- und formschlüssig miteinander verbunden.

Bei allen dort gezeigten Verbundelektrodenteilen 3' ist eine Hülse 10 vorgesehen, welche vorzugsweise aus einem weicheren und kostengünstigeren Werkstoff besteht und daher schaftschonende Eigenschaften hat. Mit dieser Hülse 10 ist ein Einsatz 11 aus Hochleistungswerkstoff bzw. Spezialwerkstoff vernietet. Die Auslegung ist hierbei derart getroffen, dass die für das Widerstandsschweißen erforderliche Anpresskraft und der Schweißstrom direkt von dem Halter 2 auf den Einsatz 11 aus Hochleistungswerkstoff übertragen werden. Bei allen in den Figuren der Zeichnung dargestellten Ausführungsvarianten ist das Verbundelektrodenteil 3' derart ausgelegt, dass der Einsatz 11 aus Hochleistungswerkstoff nur den schweißtechnisch relevanten Bereich erfasst, das heißt jenen Bereich, an welchem das Elektrodenteil 3' in Berührung mit dem Schweißgut kommt oder mit diesem zusammen arbeitet. Durch diese Auslegungsform eines Verbundelektrodenteils 3' lassen sich die Gestehungskosten für derartige Widerstandsschweißelektroden insbesondere auf Grund von beträchtlicher Materialersparnis reduzieren, da nur jene Bereiche des Elektrodenteils 3' aus hochwertigem und teurem Spezialwerkstoff bestehen, die in unmittelbarem Wirkzusammenhang mit dem Schweißen kommen. Für alle anderen Bereiche des Verbundelektrodenteils 3' können kostengünstigere Werkstoffe gewählt werden.

Figur 6 zeigt ein Verbundelektrodenteil 3' in Form einer Elektrodenkappe (female) und Figur 7 eine Ausführungsform, bei der das Verbundelektrodenteil 3' als Stiftelektrode7 (male) ausgebildet ist. Ähnlich wie bei Figur 3 ist in Figur 8 eine Ausführungsvariante mit einer entsprechenden Abstreifhilfe verdeutlicht.

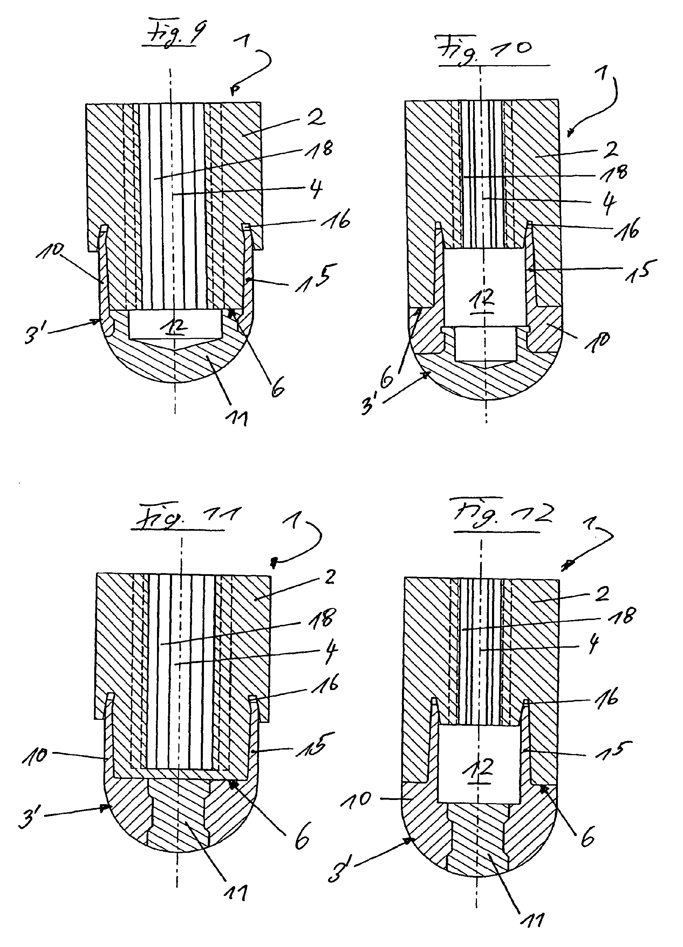

Die Figuren 9 und 10 zeigen jeweils Verbundelektrodenteile 3', die noch eine zusätzliche Kühlbohrung 12 im Bereich des Einsatzes 11 aus dem Hochleistungswerkstoff besitzen. In Figur 9 ist als Verbundelektrodenteil 3' eine Elektrodenkappe 5 und in Figur 10 eine Stiftelektrode 7 gezeigt.

Die Figuren 11 und 12 zeigen jeweils Verbundelektrodenteile 3', bei denen eine noch weitere Materialeinsparung im Hinblick auf den Einsatz 11 aus Spezialwerkstoff verdeutlicht ist. Das in Figur 11 gezeigte Verbundelektrodenteil 3' ist als Elektrodenkappe 5 ausgebildet und das in Figur 12 gezeigte Verbundelektrodenteil 3' als Stiftelektrode 7. Ähnlich wie in Figur 5 durchsetzt in Figur 11 die Kühlbohrung 4 mit den Kühlrippen 18 den Halter 2 nicht vollständig, um ein Auslaufen von Kühlflüssigkeit im Falle eines Wechsels des Verbundelektrodenteils 3' zu verhindern.

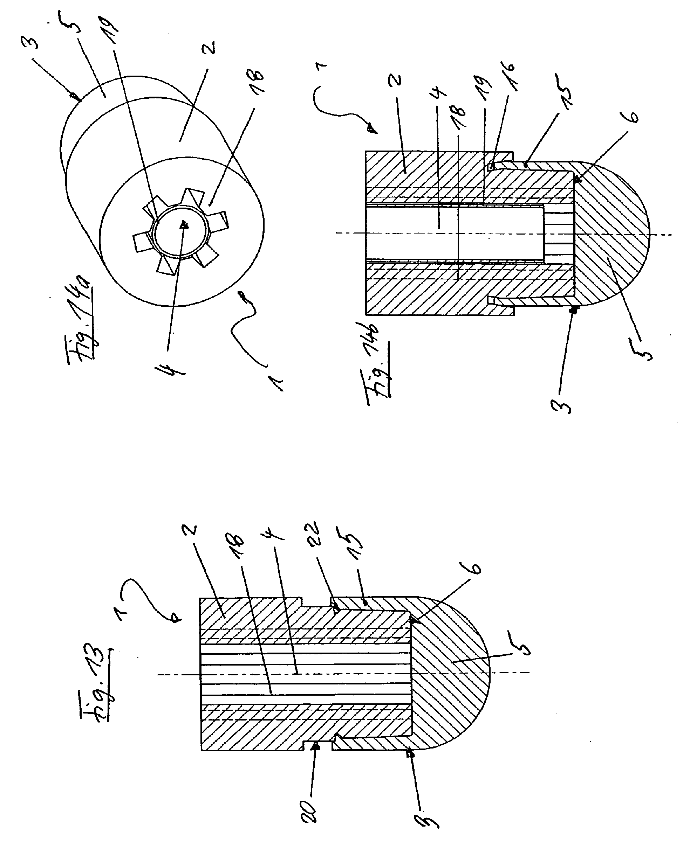

In Figur 13 ist eine Ausführungsvariante einer Widerstandsschweißelektrode 1 gezeigt. Hierbei ist beispielhaft eine Zusatzarretierung 22 gezeigt, welche radial kraft- und formschlüssig wirkt, um einen sicheren Festsitz von Halter 2 und Elektrodenteil 3 zu erreichen. Hierbei lassen sich Bearbeitungskosten am Halter 2 und dem Elektrodenteil 3 einsparen.

Die Figuren 14a und 14b verdeutlichten eine beispielsweise in Figur 1 gezeigte Widerstandsschweißelektrode mit den näheren Einzelheiten zur Verwirklichung einer verstärkten, intensiven und effizienten Kühlung. Wie aus diesen Figuren zu ersehen ist, weist die Kühlbohrung 4, wie dies auch schon voranstehend erläutert worden ist, Kühlrippen 18 auf. In den von der Kühlbohrung 4 und den Kühlrippen 18 gebildeten Innenraum des Halters 2 ist mittig ein Kühlrohr 19 eingesetzt. Die Kühlrippen 18 halten somit das Rohr 19 mittig. Aufgrund der Kühlrippen 18 und dieser Kühlanordnung insgesamt ist zu erwarten, dass der Halter einer geringeren thermischen Beanspruchung ausgesetzt ist. Daher lässt sich der Halter 2 aus billigerem, jedoch thermisch und elektrisch besser leitfähigem Material, wie z.B. Elektrolytkupfer herstellen.

Diese an Hand den Figuren 14a und 14b verdeutlichte Ausgestaltungsform der Kühlung bei einer Widerstandsschweißelektrode 1 nach der Erfindung lässt sich natürlich in gleicher oder ähnlicher Weise auch bei einem Elektrodenteil 3 in Form einer Stiftelektrode 7 oder in Form eines Verbundelektrodenteils 3' vorsehen. Alle die zuvor gezeigten und erläuterten Kühlbohrungen 4 können somit auf die an Hand den Figuren 14a und 14b verdeutlichte Weise ausgestaltet werden.

Selbstverständlich ist die Erfindung nicht auf die voranstehend beschriebenen und an Hand der bevorzugten Ausführungsformen erläuterten Einzelheiten beschränkt, sondern es sind zahlreiche Abänderungen und Modifikationen möglich, die der Fachmann im Bedarfsfall treffen wird, ohne den Erfindungsgedanken, wie durch die Ansprüche definiert, zu verlassen.

Insbesondere ist es bei der erfindungsgemäße Ausgestaltung der Widerstandsschweißelektrode 1 wesentlich, dass man beim Zusammenfügen von Elektrodenteil 3 bzw. 3' am schaftförmigen Halter 2 einen äußerst kleinen Konuskegelwinkel von bis etwa 3° vorsieht. Im Hinblick auf die Optimierung der Kraftübertragungsverhältnisse und der Stromübertragungsverhältnisse ist eine Radialflächenauflage an der Grenzfläche zwischen Elektrodenteil 3 bzw. 3' und Halter 2 vorgesehen, welcher den Halter 2 und das Elektrodenteil 3 bzw. 3' axial miteinander in Kontakt hält. Um einen zuverlässigen Festsitz des Elektrodenteils 3 bzw. 3' und Halter 2 sicher zu stellen, ist ein vorspringender Rand 15 des Elektrodenteils 3 bzw. 3' vorgesehen, welcher in eine zugeordnete, halterseitige Aufnahmeausnehmung 16 wenigstens durch Reduzieren eingezwängt ist. Durch diese Verformung ist das Elektrodenteils 3 bzw. 3' sicher am Halter 2 gehalten.

Gemäß einem weiteren Aspekt nach der Erfindung wird zum Zwecke der Schonung von Ressourcen und der Reduzierung von Materialkosten eine Auslegungsform des Verbundelektrodenteils 3' vorgeschlagen, bei dem das Elektrodenteil 3' aus mehreren Teilen zusammen gesetzt ist. Dieses Verbundelektrodenteil 3' weist wenigstens eine Hülse 10 aus einem weicheren und kostengünstigeren Werkstoff auf, mit welchem ein Einsatz 11 aus einem Hochleistungswerkstoff bzw. Spezialwerkstoff kraft- und formschlüssig verbunden ist.

### Bezugszeichenliste

- 1: Widerstandsschweißelektrode insgesamt
- 2: schaftförmiger Halter insgesamt
- 3: Elektrodenteil insgesamt
- 3': Verbundelektrodenteil
- 4: Kühlbohrung
- 5: Elektrodenkappe
- 6: Radialflächenauflage
- 7: Stiftelektrode
- 8: die dem Halter 2 zugewandte Seite des Elektrodenteils (3)
- 9: Zusatzkühlbohrung
- 10: Hülse
- 11: Einsatz
- 12: Zusatzbohrung
- 15: Rand des Elektrodenteils
- 16: Aufnahmeausnehmung halterseitig
- 18: Kühlrippen
- 19: Kühlrohr
- 20: Umfangsausnehmung als Greiferaufnahme
- 22: Zusatzarretierung radial wirkend

## Patentansprüche

1. Widerstandsschweißelektrode mit einem schaftförmigen Halter (2) und einem Elektrodenteil (3; 3') in Form einer Elektrodenkappe (5) oder einer Stiftelektrode (7), welche über Konusflächen kraftschlüssig verbunden sind und wenigstens eine Kühlbohrung (4) haben, wobei der Halter (2) und das Elektrodenteil (3; 3') derart gefügt sind, dass der Halter (2) und das Elektrodenteil (3; 3') zusätzlich über eine Radialflächenauflage (6) axial in Kontakt mit einander sind, **dadurch gekennzeichnet daß** der Konuswinkel der Konusflächen in einem Bereich von etwa 1 bis etwa 3 Grad liegt und der dem Halter (2) zugewandte Rand (15) des Elektrodenteils (3, 3') in eine zugeordnete, halterseitige Aufnahmeausnehmung (16) durch Reduzieren eingezwängt ist.

2. Widerstandsschweißelektrode nach Anspruch 1, **dadurch gekennzeichnet, dass** bei einer Elektrodenkappe (3) die Kühlbohrung (4) nicht durchgehend ausgebildet ist, sondern im Halter (2) endet und diesen auch nicht vollständig durchsetzt.

3. Widerstandsschweißelektrode nach Anspruch 1 oder 2, **dadurch gekennzeichnet, dass** die Kühlbohrung (4) mit Kühlrippen (18) versehen ist.

4. Widerstandsschweißelektrode nach Anspruch 3, **dadurch gekennzeichnet, dass** in den von den Kühlrippen (18) gebildeten Innenraum des Halters (2) ein Kühlrohr (19) mittig angesetzt ist.

5. Widerstandsschweißelektrode nach einem der vorangehenden Ansprüche, **dadurch gekennzeichnet, dass** das Elektrodenteil (3; 3') eine relativ dünne Wandstärke besitzt.

6. Widerstandsschweißelektrode nach einem der vorangehenden Ansprüche, **dadurch gekennzeichnet, dass** als Abstreifhilfe die dem Halter (2) zugewandte Seite (8) des Elektrodenteils (3) derart gestaltet ist, dass zwischen dem Halter (2) und dem Elektrodenteil (3; 3') eine Umfangsausnehmung (20) als eine Greiferaufnahme gebildet wird.

7. Widerstandsschweißelektrode nach einem der vorangehenden Ansprüche, **dadurch gekennzeichnet, dass** das Elektrodenteil (3; 3') eine axiale Zusatzkühlbohrung (9) hat.

8. Widerstandsschweißelektrode nach einem der vorangehenden Ansprüche, **dadurch gekennzeichnet, dass** zwischen dem Elektrodenteil (3; 3') und dem Halter (2) eine radial kraft- und formschlüssig wirkende Zusatzarretierung (22) vorgesehen ist.

9. Widerstandsschweißelektrode nach einem der vorangehenden Ansprüche, **dadurch gekennzeichnet, dass** das Elektrodenteil (3) als Verbundelektrodenteil (3') ausgebildet ist.

10. Widerstandsschweißelektrode nach Anspruch 9, **dadurch gekennzeichnet, dass** das Verbundelektrodenteil (3') eine Hülse (10), vorzugsweise aus einem weicheren und kostengünstigeren Werkstoff, und einen mit der Hülse (10) vernieteten Einsatz (11) aus einem Hochleistungswerkstoff bzw. Spezialwerkstoff umfasst.

11. Widerstandsschweißelektrode nach Anspruch 9 oder 10, **dadurch gekennzeichnet, dass** der Halter (2) die Anpresskraft für das Widerstandsschweißen und den Schweißstrom im wesentlichen direkt axial auf den Einsatz (11) aus Hochleistungswerkstoff übertragen.

12. Widerstandsschweißelektrode nach einem der Ansprüche 9 bis 11, **dadurch gekennzeichnet, dass** der Einsatz (11) aus Hochleistungswerkstoff eine axiale Zusatzbohrung (12) umfasst.

13. Widerstandsschweißelektrode nach einem der Ansprüche 9 bis 12, **dadurch gekennzeichnet, dass** der Einsatz (11) aus Hochleistungswerkstoff nur die schweißtechnisch relevanten Bereiche, das heißt die mit dem Schweißguss zusammen arbeitenden Bereiche, erfasst.

14. Widerstandsschweißelektrode nach einem der Ansprüche 9 bis 13, **dadurch gekennzeichnet, dass** die Teile des Verbundelektrodenteils (3') aus unterschiedlichen Materialien im Hinblick auf eine verbesserte Recyclebarkeit lediglich kraft- und formschlüssig miteinander verbunden sind.

## Claims

1. Resistance welding electrode with a shaft-like holder (2) and an electrode member (3; 3') in the form of an electrode cap (5) or a rod electrode (7), which are joined in a friction-locked manner by means of tapered surfaces and have at least one cooling bore (4), wherein the holder (2) and the electrode member (3; 3') are joined in such a way that the holder (2) and the electrode member (3; 3') are additionally axially in contact with one another by means of a radial surface support (6), **characterised in that** the taper angle of the tapered surfaces is in a range of approximately 1 to approximately 3 degrees and the edge (15) of the electrode member (3, 3') abutting the holder (2) is wedged in an associated, holder-side recess support (16) by tapering.

2. Resistance welding electrode in accordance with claim 1, **characterised in that** the cooling bore (4) with an electrode cap (3) is not continuous but ends in the holder (2) and also does not completely penetrate this.

3. Resistance welding electrode in accordance with claim 1 or 2, **characterised in that** the cooling bore (4) is provided with cooling ribs (18).

4. Resistance welding electrode in accordance with claim 3, **characterised in that** a cooling tube (19) is positioned in the centre of the internal space of the holder (2) formed by the cooling ribs (18).

5. Resistance welding electrode in accordance with one of the preceding claims, **characterised in that** the electrode member (3; 3') has a relatively thin wall thickness.

6. Resistance welding electrode in accordance with one of the preceding claims, **characterised in that** the side (8) of the electrode member (3) facing the holder (2) is configured as stripping aid so that a peripheral recess (20) is
formed between the holder (2) and the electrode member (3; 3') as a gripper mounting.

7. Resistance welding electrode in accordance with one of the preceding claims, **characterised in that** the electrode member (3; 3') has an additional axial bore (9).

8. Resistance welding electrode in accordance with one of the preceding claims, **characterised in that** a radial friction-locking and form-fitting supplementary interlocking arrangement (22) is provided between the electrode member (3; 3') and the holder (2).

9. Resistance welding electrode in accordance with one of the preceding claims, **characterised in that** the electrode member (3) is configured as composite electrode member (3').

10. Resistance welding electrode in accordance with claim 9, **characterised in that** the composite electrode member (3') comprises a sleeve (10), preferably of a softer and less costly material, and an insert (11) riveted to the sleeve (10) of a high-performance or special material.

11. Resistance welding electrode in accordance with claim 9 or 10, **characterised in that** the holder (2) transmits the contact pressure for the resistance welding and the welding current axially substantially direct to the insert (11) of high-performance material.

12. Resistance welding electrode in accordance with one of the claims 9 to 11, **characterised in that** the insert (11) of high-performance material comprises an axial supplementary bore (12).

13. Resistance welding electrode in accordance with one of the claims 9 to 12, **characterised in that** the insert (11) of high-performance material only includes the welding-related area, that is the area working together with the weld nugget.

14. Resistance welding electrode in accordance with one of the claims 9 to 13, **characterised in that** the parts of the composite electrode member (3') of different materials are joined together only by friction-locking and form fitting in respect of an improved recyclability.

## Revendications

1. Électrode de soudage par résistance avec un support en forme de tige (2) et un élément d'électrode (3; 3') sous forme de capuchon d'électrode (5) ou d'électrode aiguille (7) assemblés par liaison de force par l'intermédiaire de surfaces coniques et possédant au moins un orifice de refroidissement (4), étant ajoutés de manière que le support (2) et l'élément d'électrode (3; 3') soient en contact axial entre eux par l'intermédiaire d'un revêtement de surface radial (6), **caractérisée en ce que** l'angle de cône des surfaces coniques se situe dans une zone d'environ 1 à 3 degrés et **en ce que** le bord (15) de l'élément d'électrode (3; 3') tourné vers le support (2) est comprimé par réduction dans un évidement récepteur (16) dédié situé côté support.

2. Électrode de soudage par résistance selon la revendication 1, **caractérisée en ce que**, pour un capuchon d'électrode (3), l'orifice de refroidissement (4) n'est pas continu, mais se termine dans le support (2) et ne traverse pas non plus entièrement celui-ci.

3. Électrode de soudage par résistance selon la revendication 1 ou 2, **caractérisée en ce que** l'orifice de refroidissement (4) est muni d'ailettes de refroidissement (18).

4. Électrode de soudage par résistance selon la revendication 3, **caractérisée en ce qu'**un tube de refroidissement (19) se trouve dans la partie intérieure du support (2) formée par les ailettes de refroidissement (18).

5. Électrode de soudage par résistance selon l'une des revendications précédentes, **caractérisée en ce que** l'élément d'électrode (3; 3') possède une paroi relativement peu épaisse.

6. Électrode de soudage par résistance selon l'une des revendications précédentes, **caractérisée en ce que** le côté (8) de l'élément d'électrode (3) tourné vers le support (2) servant de racle est conçu de telle manière qu'il existe un évidement périphérique (20) entre le support (2) et l'élément d'électrode (3; 3') sous la forme d'un logement pour pince.

7. Électrode de soudage par résistance selon l'une des revendications précédentes, **caractérisée en ce que** l'élément d'électrode (3; 3') présente un orifice de refroidissement supplémentaire (9) axial.

8. Électrode de soudage par résistance selon l'une des revendications précédentes, **caractérisée en ce qu'**un arrêt supplémentaire (22) radial agissant par liaison de force et par emboîtement est prévu entre l'élément d'électrode (3; 3') et le support (2).

9. Électrode de soudage par résistance selon l'une des revendications précédentes, **caractérisée en ce que** l'élément d'électrode (3) est conformé comme élément d'électrode composite (3').

10. Électrode de soudage par résistance selon la revendication 9, **caractérisée en ce que** l'élément d'électrode composite (3') entoure une gaine (10), de préférence en matériau plus doux et moins cher, et un insert (11), riveté à la gaine (10), en matériau haute performance ou en matériau spécial.

11. Électrode de soudage par résistance selon la revendication 9 ou 10, **caractérisée en ce que** le support (2) transmet la force de pression pour le soudage par résistance et le courant de soudage essentiellement de manière directement axiale sur l'insert (11) en matériau haute performance.

12. Électrode de soudage par résistance selon l'une des revendications 9 à 11, **caractérisée en ce que** l'insert (11) en matériau haute performance entoure un orifice axial supplémentaire (12).

13. Électrode de soudage par résistance selon l'une des revendications 9 à 12, **caractérisée en ce que** l'insert (11) en matériau haute performance intègre les zones importantes pour le soudage, c'est-à-dire les zones fonctionnant avec la coulée du soudage.

14. Électrode de soudage par résistance selon l'une des revendications 9 à 13, **caractérisée en ce que** les éléments de l'élément d'électrode composite (3') en matériaux divers, par souci d'amélioration des possibilités de recyclage, sont liés entre eux uniquement par liaison de force et par emboîtement.
